# DEMANDE DE BREVET EUROPEEN

(11) **EP 0 930 250 A1**
(43) Date de publication de la demande: **21.07.1999**
(21) Numéro de dépôt: 98440008.5
(22) Date de dépôt: 20.01.1998
(51) Int. Cl.: B65G 33/30, A01C 3/06, A01K 5/02, A01D 90/10

(54) **Dispositif de vis de convoyage de produits granulaires ou fibreux en vrac destiné notamment au déchargement latéral desdits produits dans des bennes de distribution**

(71) Demandeur: Desvoys S.A., 53190 Landivy (FR)
(72) Inventeur: Desvoys, Maurice, 53190 Landivy (FR)
(74) Mandataire: Arbousse-Bastide, Jean-Claude Philippe

(57) **Abrégé**

Dispositif de vis de convoyage de produits granulaires ou fibreux en vrac destiné notamment au déchargement latéral desdits produits dans des bennes de distribution.

Il comprend un axe cylindrique (1) le long duquel se trouvent disposées deux rangées (2,3) de pales (20',21',22',23') de manière que les pales (20',21',22',23') d'une rangée (2) soient sensiblement diamétralement opposées aux pales (20',21',22') de l'autre rangée (3), lesdites pales étant des segments de deux hélicoïdes, un pour chaque rangée (2,3), et lesdits hélicoïdes étant de même diamètre, décalés longitudinalement entre eux et comprenant chacun deux pas différents.

## Description

La présente invention a pour objet un dispositif de vis de convoyage de produits granulaires ou fibreux en vrac pour l'alimentation du bétail, destiné notamment au déchargement latéral desdits produits dans des bennes distributrices.

Les bennes de distribution d'aliments, herbe ou fourrage, sont généralement montées sur un chargeur porté par un tracteur agricole et sont destinées à transférer les aliments pour animaux d'un lieu de stockage à une auge. Pour ce faire, elles comprennent un dispositif de convoyage qui se présente sous la forme d'une vis d'Archimède entraînée par un moteur hydraulique, disposée dans le fond desdites bennes pour déplacer les produits alimentaires vers une extrémité latérale de la benne où est ménagée une ouverture d'évacuation par laquelle ils sont déversés régulièrement le long d'une auge réceptrice.

Toutefois, ces dispositifs de convoyage ne permettent pas un transfert régulier des aliments vers l'ouverture d'évacuation, ce qui provoque le calage du moteur d'entraînement de la vis de convoyage. En outre les aliments sont fréquemment bloqués dans la partie supérieure de la benne, ce qui nécessite d'une part d'interrompre le fonctionnement de la vis tournant dans le vide, et d'autre part de décoller les aliments afin de les ramener au contact de la vis, avec pour conséquence une perte de temps considérable et des risques de manipulation.

Le document FR-A-2658697 décrit un dispositif de trémie allongée présentant des côtés inclinés vers l'intérieur et montée sur des roues, pour être tractée, et comportant un rotor axial d'alimentation qui s'étend le long de la base de ladite trémie et qui est pourvu de plusieurs pales positionnées le long dudit rotor de telle sorte que le long de l'axe du rotor il n'y ait pas deux pales exactement alignées, chacune desdites pales étant inclinée à la fois en étant positionnée transversalement à l'axe du rotor et en étant également inclinée sur une partie de sa surface orientée en direction de l'arrière de la trémie.

Le document US-A-4832267 porte sur un appareil tracté pour la distribution de matière, notamment pour l'épandage de fumier, et pour le mélangeage et la distribution des aliments pour animaux, ou équivalents, ledit appareil comprenant une trémie allongée comportant un rotor axial d'alimentation pourvu de plusieurs pales positionnées le long dudit rotor selon une trajectoire hélicoïdale inverse, et inclinées en opposition par rapport au sens de l'hélice inverse.

Le document GB-A-2150100 décrit un convoyeur de matériau en vrac destiné notamment au secteur agricole et comprenant un arbre constitué de deux parties supportant des ailettes disposées, selon des trajectoires hélicoïdales dont les pas sont opposés.

Toutefois, ces dispositifs qui sont tractés et encombrant ne permettent pas une distribution à l'intérieur des bâtiments d'élevage et présentent toujours des problèmes de circulation des produits alimentaires à évacuer qui ont tendance à se compacter autour des vis de distribution, notamment en ce qui concerne la circulation de produits alimentaires très fibreux, ce qui nuit au bon fonctionnement des dispositifs et entraîne des problèmes de bourrage et des interruptions fréquentes.

La présente invention a pour objet de remédier aux inconvénients des dispositifs connus en proposant un dispositif de vis de convoyage, destiné notamment à être installé dans une benne distributrice du domaine agricole, visant à faciliter la circulation du matériau à distribuer afin d'empêcher les interruptions de fonctionnement, et le blocage des matériaux dans la partie supérieure de la benne tout en offrant un meilleur rendement et un coût d'entretien réduit.

Le dispositif de vis de convoyage de produits granulaires ou fibreux selon la présente invention se caractérise essentiellement en ce qu'il comprend un axe cylindrique le long duquel se trouvent disposées deux rangées de pales de manière que les pales d'une rangée soient sensiblement diamétralement opposées aux pales de l'autre rangées, lesdites pales étant chacune un segment d'un hélicoïde, à savoir un hélicoïde pour chaque rangée, lesdits hélicoïdes étant de même diamètre, décalés longitudinalement entre eux et comprennant chacun deux pas différents.

Dans un mode de réalisation préférentiel de l'invention, une des deux rangées comporte deux séries de pales , à savoir:
- une première série de pales, disposées sur la moitié de l'axe située du côté du moyen d'entraînement dudit axe,
- une deuxième série de pales disposées sur la moitié de l'axe proche de l'ouverture d'évacuation de la benne de distribution; et
   en ce que l'autre rangée comporte une pale centrale et de part et d'autre de celle-ci:
- une première série de pales, disposées sur la moitié de l'axe située du côté de l'entraînement dudit axe,
- une deuxième série de pales disposées sur la moitié de l'axe proche de l'ouverture d'évacuation de la benne de distribution, et une pale, identique à celles de la première série, disposée entre l'extrémité de l'arbre et les pales de la deuxième série,
   le pas des deux hélicoïde étant différent pour chaque série de pâles, le pas de la première série de pales étant inférieur au pas de la deuxième série.

Selon une caractéristique de l'invention le secteur angulaire défini par la pale centrale et par les pales de la première série de chacune des rangées est de dimension angulaire inférieure à celle des secteurs définis par les pales de la deuxième série de chacune desdites rangées.

Selon une autre caractéristique de l'invention la deuxième série de pales de la première rangée et la deuxième série de pales de la deuxième rangée comporte une découpe en arc de cercle pratiquée dans le bord opposé au bord d'attaque.

Selon une autre caractéristique de l'invention les bords des pales sont biseautés de manière à permettre une meilleure pénétration dans les produits alimentaires et notamment les produits alimentaire les plus fibreux.

Les avantages et les caractéristiques de la présente invention ressortiront plus clairement de la description qui suit et qui se rapporte au dessin annexé, lequel en représente un mode de réalisation non limitatif.

Dans le dessin annexé :
- La figure 1 représente une vue en perspective du dispositif de vis selon l'invention.
- La figure 2a représente une vue schématique du premier ensemble de pale du dispositif de vis selon l'invention.
- la figure 2b représente une vue schématique deuxième ensemble de pales de la même vis.
- la figure 2c représente une vue schématique de différentes formes de pales solidarisées à l'axe du dispositif de vis selon l'invention.

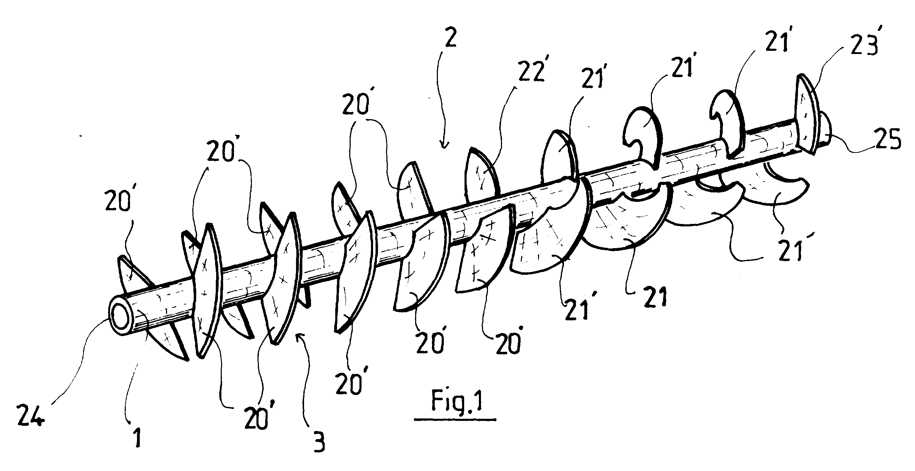

Si on se réfère à la figure 1 on peut voir qu'un dispositif de vis de distribution selon l'invention comprend un arbre 1 autour duquel sont solidarisées deux rangées 2 et 3 de pales plates, chaque pale étant un segment d'un hélicoïde, un par rangée, les deux hélicoïdes étant décalés longitudinalement, et le diamètre extérieur de la vis formé par les deux rangées de pales étant constant sur toute la longueur de la vis.

On peut voir également que les pales de la rangée 2 sont disposées sensiblement diamétralement par rapport aux pales de la rangée 3 et que chaque rangée de pales 2 ou 3 comporte des pales de forme différente.

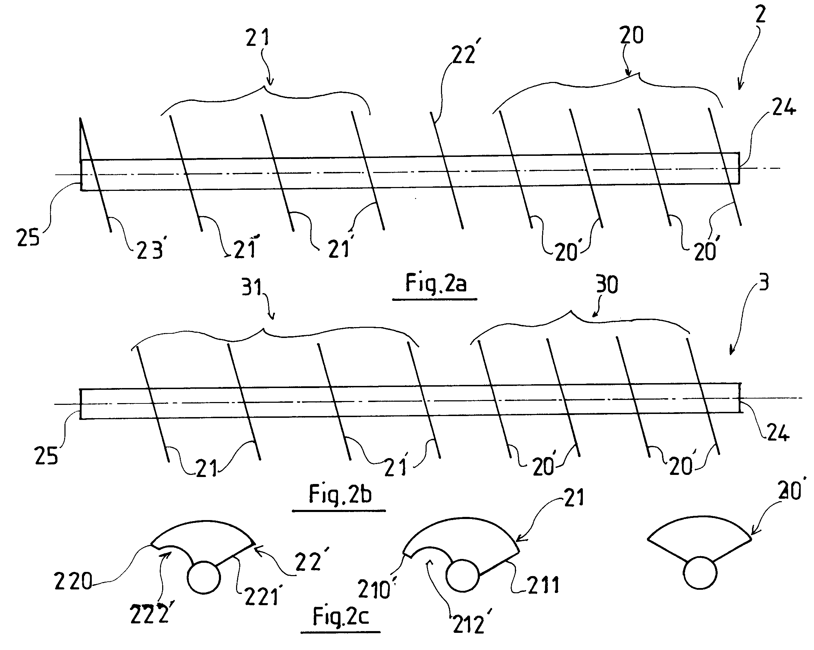

La rangée de pales 2, comme on peut le voir aux figures 2a et 2c, comporte une première série 20 de pales 20' disposée sur la moitié de la vis proche de l'extrémité d'entraînement 24 ; une deuxième série 21 de pales 21' disposée sur l'autre moitié, dans le bord 210', opposé au bord d'attaque 211', de chacune desquelles est pratiquée une découpe 212' en arc de cercle permettant de réduire la surface de contact avec le produit alimentaire à déplacer de manière à en faciliter la circulation ; une pale centrale 22', disposée entre les deux autres séries de pales 20 et 21, comportant une découpe en arc de cercle 222' dans son bord 220' opposé à son bord d'attaque 221' et étant de dimension angulaire inférieure à celle des pales 21' de la deuxième série; et une pale d'extrémité 23' du même type que les pales 20' de la première série 20 disposée entre l'extrémité 25 opposée à l'extrémité d'entraînement 24 de la vis et la deuxième série de pales 21.

La rangée de pales 3 comme on peut le voir sur les figures 2b et 2c, comporte une première série de pales 30, identiques aux pales 20' de la première série de la rangée 2, disposée sur la première moitié de la vis la plus proche de l'extrémité d'entraînement de cette dernière et une deuxième série de pales 31 identiques aux pales 21' de la deuxième série 21 de la rangée de pales 2.

On remarquera également sur les figures 2a et 2b que le pas des deux hélicoïdes est différent suivant la forme et/ou les dimensions des pales variant notamment entre chaque série de pales en sorte que le pas relatif aux pales de la première série 20,30 de chaque hélicoïde est inférieur au pas de la deuxième série 21,31 et au pas entre la deuxième série 21 et la pale d'extrémité 23' de la première rangée de pales 2, de même qu'entre les pales de la première série 20 et de la deuxième série 21 et la pale centrale 22' de la première rangêe 2.

La vis selon l'invention permet d'obtenir un bon entraînement des aliments en première partie de la benne de distribution et une bonne évacuation desdits aliments et empêche les interruptions momentannées du fonctionnement de ladite vis.

## Revendications

1. Dispositif de vis de convoyage de produits granulaires ou fibreux en vrac destiné notamment au déchargement latéral desdits produits dans des bennes de distribution caractérisé en ce qu'il comprend un axe cylindrique (1) le long duquel se trouvent disposées deux rangées (2,3) de pales (20',21',22',23') de manière que les pales (20',21',22',23') d'une rangée (2) soient sensiblement diamétralement opposées aux pales (20',21',22') de l'autre rangée (3), lesdites pales étant des segments de deux hélicoïdes, un pour chaque rangée (2,3), et lesdits hélicoïdes étant de même diamètre, décalés longitudinalement entre eux et comprenant chacun deux pas différents.

2. Dispositif selon la revendication 1 caractérisé en ce qu'une des deux rangées (3) comporte deux séries (30,31) de pales (20',21',22'), à savoir:
- une première série (30) de pales (20'), disposées sur la moitié de l'axe (1) située du côté du moyen d'entraînement dudit axe (1),
- une deuxième série (31) de pales (21') disposées sur la moitié de l'axe proche de l'ouverture d'évacuation de la benne de distribution ;
et en ce que l'autre rangée (2) comporte une pale centrale (22') et de part et d'autre de celle-ci:
- une première série (20) de pales (20') disposées sur la moitié de l'axe (1) située du côté du moyen d'entraînement dudit axe,
- une deuxième série (21) de pales (21') disposées sur la moitié de l'axe proche de l'ouverture d'évacuation de la benne de distribution, et une pale (23'), identique à celles (20') de la première série (20), disposée entre l'extrémité de l'arbre et les pales (21') de la deuxième série (21),
le pas des deux hélicoïdes étant différent pour chaque série (20,21,30,31) de pâles (20',21',22'), le pas de la première série de pales étant inférieur au pas de la deuxième série.

3. Dispositif selon la revendication 2 caractérisé en ce que le secteur angulaire défini par la pale centrale (22') et par les pales (20') de la première série (20,30) de chacune des rangées (2,3) est de dimension angulaire inférieure à celle des secteurs définis par les pales (21') de la deuxième série (21,31) de chacune desdites rangées (2,3).

4. Dispositif selon la revendication 2 ou 3 caractérisé en ce que la deuxième série (31) de pales (21') de la première rangée (3) et la deuxième série (21) de pales (21') de la deuxième rangée comporte une découpe en arc de cercle (212') pratiquée dans le bord opposé (210') au bord d'attaque (211').

5. Dispositif selon l'une quelconque des revendications précédentes caractérisé en ce que les bords des pales (20',21',22',23') sont biseautés.
